# EUROPÄISCHE PATENTSCHRIFT

(11) **EP 2 430 474 B1**
(45) Veröffentlichungstag und Bekanntmachung des Hinweises auf die Patenterteilung: **14.08.2013**
(21) Anmeldenummer: 10718507.6
(22) Anmeldetag: 06.04.2010
(51) Int. Cl.: G01S 7/52, G01S 15/93

(54) **VERFAHREN ZUR FUNKTIONSPRÜFUNG EINES ULTRASCHALLSENSORS AN EINEM KRAFTFAHRZEUG, VERFAHREN ZUM BETRIEB EINES ULTRASCHALLSENSORS AN EINEM KRAFTFAHRZEUG UND ABSTANDSMESSVORRICHTUNG MIT MINDESTENS EINEM ULTRASCHALLSENSOR ZUR VERWENDUNG IN EINEM KRAFTFAHRZEUG**
METHOD FOR THE FUNCTIONAL TESTING OF AN ULTRASONIC SENSOR ON A MOTOR VEHICLE, METHOD FOR OPERATING AN ULTRASONIC SENSOR ON A MOTOR VEHICLE, AND DISTANCE MEASURING APPARATUS HAVING AT LEAST ONE ULTRASONIC SENSOR FOR USE IN A MOTOR VEHICLE
PROCÉDÉ D'ESSAI DE FONCTIONNEMENT D'UN CAPTEUR À ULTRASONS SUR UN VÉHICULE À MOTEUR, PROCÉDÉ PERMETTANT DE FAIRE FONCTIONNER UN CAPTEUR À ULTRASONS SUR UN VÉHICULE À MOTEUR, ET DISPOSITIF DE MESURE DE DISTANCE PRÉSENTANT AU MOINS UN CAPTEUR À ULTRASONS POUR L'UTILISATION DANS UN VÉHICULE À MOTEUR

(30) Priorität: 13.05.2009 DE 102009003049
(43) Veröffentlichungstag der Anmeldung: 21.03.2012
(73) Patentinhaber: Robert Bosch GmbH, 70442 Stuttgart (DE)
(72) Erfinder: KLOTZ, Albrecht, 71229 Leonberg (DE)
(86) Internationale Anmeldenummer: PCT/EP2010/054484
(87) Internationale Veröffentlichungsnummer: WO 2010/130508

(56) Entgegenhaltungen:
- DE-A1-102005 013 589
- DE-A1-102005 057 973

## Beschreibung

Die Erfindung beschreibt ein Verfahren zur Funktionsprüfung eines Ultraschallsensors an einem Kraftfahrzeug, ein Verfahren zum Betrieb eines Ultraschallsensors an einem Kraftfahrzeug und eine Abstandsmessvorrichtung mit mindestens einem Ultraschallsensor zur Verwendung in einem Kraftfahrzeug.

### Stand der Technik

Abstandsmessvorrichtungen für Kraftfahrzeuge, die mittels Ultraschallsignalen den Abstand zu Hindernissen in der Fahrzeugumgebung bestimmen, sind seit langem bekannt. Hierbei wird von einem Sensor ein Ultraschallsignal ausgesendet, das von einem Hindernis reflektiert wird. Das reflektierte Signal wird von dem Sensor, der es ausgesendet hat, oder ggf. auch von einem anderen Sensor wieder empfangen. Aus der Laufzeit des Signals wird der Abstand des Hindernisses zu dem Fahrzeug bestimmt. Derartige Ultraschall-Abstandsmessvorrichtungen dienen insbesondere dazu, den Fahrer bei einem Einparken des Fahrzeugs zu unterstützen. Die Bandbreite der Fahrerassistenz geht dabei von der Ausgabe eines einfachen Warnhinweises hinsichtlich eines erkannten Hindernisses bis zur automatischen Geschwindigkeitsregelung in Abhängigkeit von der Hindernissituation (Parkstopp-Funktion). Dabei werden immer höhere Anforderungen an die Verfügbarkeit der Abstandsmessvorrichtung und damit der Ultraschallsensoren gestellt. Es ist daher bekannt, für die jeweilige Umfeldsensorik Funktionsprüfungen - häufig auch als Blindheits-Prüfung bezeichnet - in Form von Selbsttests durchzuführen. Insbesondere bei Ultraschallsensoren kann es zu einem möglicherweise auch schleichenden Leistungsabfall infolge von Verschmutzung kommen.

Aus der Druckschrift DE 10 2005 057 973 A1 ist ein Verfahren zur Funktionsprüfung eines Ultraschallsensors an einem Kraftfahrzeug bekannt, bei dem der Ultraschallsensor ein Ultraschallsignal abgibt und das Ultraschallsignal von einer Bodenfläche vor dem Fahrzeug reflektiert und von dem Ultraschallsensor oder einem weiteren Ultraschallsensor wieder empfangen wird. Dabei wird die Dauer und/oder die Amplitude des ausgesendeten Ultraschallsignals derart groß gewählt, dass unter herkömmlichen Bedingungen ein Empfangen des von der Bodenfläche reflektierten Signals ermöglicht wird, und dass bei einem Empfangen des reflektierten Signals eine Funktion des Ultraschallsensors festgestellt wird.

Im Vergleich mit dem bestimmungsgemäßen Einsatz des Ultraschallsensors zur Abstandsmessung - im Folgenden auch Nutzbetrieb genannt - wird demgemäß zur Durchführung der Funktionsprüfung die Dauer und/oder die Amplitude des ausgesendeten Ultraschallsignals explizit verändert. Das wiederum hat aber zur Folge, dass die Funktionsprüfung in einem besonderen Betriebsmodus - im folgenden Prüfbetrieb genannt - ausgeführt werden muss, da ansonsten erhebliche Störungen und damit Fehler bei der Abstandsmessung die Folge wären. Infolge dessen sind aber alle Fahrerassistenz-Funktionen, welche den Ultraschallsensor nutzen, während des Prüfbetriebs nicht verfügbar. Dies führt bei einer sinnvollerweise vor Funktionsstart ausgeführten Funktionsprüfung zu einer erheblichen Verzögerung der Verfügbarkeit der Fahrerassistenz-Funktionen. Da sich eine eingeschränkte Funktionsfähigkeit oder Funktionsunfähigkeit des Ultraschallsensors auch während des Betriebs einstellen kann, zum Beispiel durch Vereisung oder starke Verschmutzung, ist eine Funktionsprüfung auch während des laufenden Betriebs sinnvoll. Dies ist bei den bekannten Verfahren aber nur in Zeitabschnitten möglich, in denen die betroffene Fahrerassistenz-Funktion nicht verfügbar sein muss. Für eine klassische Einparkfunktion ist dies beispielsweise bei Fahrzeuggeschwindigkeiten oberhalb einer Grenzgeschwindigkeit von 30 km/h der Fall. Durch die funktionale Weiterentwicklung von Ultraschallsensoren, zum Beispiel die Verwendung für Parkstopp-Funktionen, wird es zunehmend schwieriger, Betriebsbedingungen und damit Betriebszeiten zu finden, in denen keine Fahrerassistenz-Funktion verfügbar sein muss, die den zu prüfenden Ultraschallsensor verwendet.

### Offenbarung der Erfindung

Die vorliegende Erfindung überwindet die oben beschriebene Problematik durch Bereitstellung eines Verfahrens zur Funktionsprüfung eines Ultraschallsensors an einem Kraftfahrzeug, bei dem der Ultraschallsensor derart angesteuert wird, dass er ein Ultraschallsignal mit einer Frequenz einer Nebenmode des Ultraschallsensor aussendet, das Ultraschallsignal von einer Fläche im Bereich um das Fahrzeug reflektiert wird und zumindest eine Sendepfad oder eine Sendeeinheit des Ultraschallsensors dann als funktionsfähig eingestuft wird, wenn das reflektierte Signal von dem Ultraschallsensor selbst oder von einem anderen Ultraschallsensor am Kraftfahrzeug empfangen wird.

Wird das reflektierte Signal von dem das Ultraschallsignal aussendenden Ultraschallsensor selbst empfangen, wird in einer Ausführungsform der Erfindung auch der Empfangspfad oder die Empfangseinheit dieses Ultraschallsensors als funktionsfähig eingestuft. Wird das reflektierte Signal dagegen von einem anderen Ultraschallsensors empfangen, wird gemäß einer weiteren Ausführungsform der Erfindung der Empfangspfad oder die Empfangseinheit dieses anderen Ultraschallsensors als funktionsfähig eingestuft.

Die erfindungsgemäßen Verfahren und die erfindungsgemäße Abstandsmessvorrichtung haben den Vorteil, dass die Fahrerassistenz-Funktionen, welche den Ultraschallsensor verwenden, durch die Funktionsprüfung nicht beeinträchtigt werden und somit die Funktionsprüfung parallel zum Nutzbetrieb des Ultraschallsensors ausgeführt werden kann. Damit ergeben sich keinerlei Ausfallzeiten, in denen ein Fahrerassistenz-System aufgrund eines Prüfbetriebs der Ultraschallsensoren nicht zur Verfügung steht.

Vorzugsweise wird der Ultraschallsensor derart gesteuert, dass das ausgesendete Ultraschallsignal von einer Bodenfläche im Bereich um das Fahrzeug reflektiert wird. Auf diese Weise wird eine weitgehende Unabhängigkeit der Funktionsprüfung vom aktuellen Standort des Kraftfahrzeugs erreicht.

Ferner ist es vorteilhaft, dass der Ultraschallsensor mit einem Steuersignal angesteuert wird, welches neben Frequenzanteilen der Nebenmode des Ultraschallsensors auch Frequenzanteile der Grundmode des Ultraschallsensors aufweist, wobei die Frequenzanteile jeweils derart groß sind, dass der Ultraschallsensor sowohl ein Ultraschallsignal mit der Frequenz der Nebenmode als auch ein Ultraschallsignal mit der Frequenz der Grundmode aussendet. Auf diese Weise erfolgt eine echte zeitliche Parallelschaltung des Nutzbetriebs und des Prüfbetriebs des Ultraschallsensors.

Gemäß einer Ausführungsform der Erfindung können die Auswertung des reflektierten Signals und damit die Einstufung der Funktionsfähigkeit in einer Auswertelogik des empfangenden Ultraschallsensors selbst oder in einer übergeordneten Steuereinheit erfolgen.

Gemäß einer vorteilhaften Ausführungsform der Erfindung werden die Ergebnisse der Funktionsprüfung in Zeitabschnitten an ein Steuergerät übertragen, in denen keine Daten aus dem Nutzbetrieb des Ultraschallsensors übertragen werden. Somit kann auch im Bereich der Signal- und/oder Datenübertragung eine Beeinflussung des Nutzbetriebs des Ultraschallsensors durch die Funktionsprüfung ausgeschlossen werden.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Fig. 1: eine schematische Ansicht einer erfindungsgemäßen Abstandsmessvorrichtung an einem Heck eines Fahrzeugs,
- Fig. 2: eine schematische Seitenansicht eines Fahrzeugs mit einer erfindungsgemäßen Abstandsmessvorrichtung, und
- Fig. 3: eine schematische Darstellung des Empfangspfades eines Ultraschallsensors einer erfindungsgemäßen Abstandsmessvorrichtung.

### Beschreibung der Ausführungsbeispiele

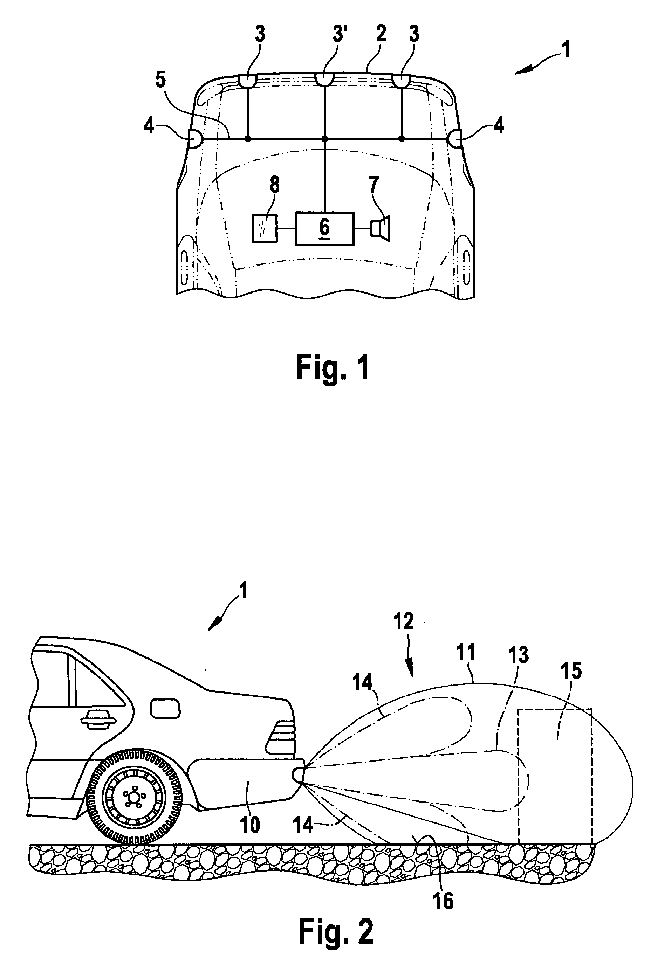

In Fig. 1 ist ein Heck eines Fahrzeugs 1 gezeigt. An einer hinteren Kante 2 des Fahrzeugs sind Ultraschallsensoren 3, 3' angeordnet. Entsprechend ist auch eine Anordnung an einer Vorderseite eines Fahrzeugs wählbar. In einer bevorzugten Ausführungsform können auch an den seitlichen Ecken des Fahrzeugs Ultraschallsensoren 4 angeordnet sein. Die Ultraschallsensoren sind mit einer übergeordneten Steuereinheit 6 verbunden. Diese Verbindung kann beispielsweise über eine Punkt-zu-Punkt Verbindung oder auch über ein Bussystem 5 erfolgen. Die übergeordnete Steuereinheit 6 steuert das Aussenden von Ultraschallsignalen mittels der Ultraschallsensoren 3, 3' und 4 an. Die Ultraschallsensoren weisen zum Beispiel jeweils ein Piezoelement auf, welches durch elektrische Anregung eine Membran zum Aussenden von Ultraschallwellen anregt. Die Ultraschallwellen werden von der Oberfläche eines möglicherweise in der Fahrzeugumgebung befindlichen Hindernisses und/oder von der Fahrbahnoberfläche reflektiert und von den Ultraschallsensoren wieder empfangen. Die übergeordnete Steuereinheit 6 kann dazu die Ultraschallsensoren 3, 3' und/oder 4 in einen Empfangsmodus schalten. In dem Empfangsmodus regen die reflektierten Ultraschallwellen die Membran der Ultraschallsensoren zu einer Schwingung an. Diese Schwingung kann über das Piezoelement in elektrische Signale umgewandelt werden. Diese elektrischen Signale werden vorzugsweise in Auswertelogiken der Ultraschallsensoren 3, 3' und/oder 4 ausgewertet. Die Auswertung kann aber auch innerhalb der übergeordneten Steuereinheit 6 erfolgen. Die Auswertung erfolgt vorzugsweise derart, dass eine Amplitude des elektrischen Signals mit einem Schwellwert in geeigneter Weise verglichen wird. Wird der Schwellwert überschritten, so wird ein Empfang eines Ultraschallsignals angenommen. Aus dem Zeitpunkt der Aussendung des Signals und des Empfangs des Signals wird die Laufzeit des Signals bestimmt. Unter Einbeziehung der Schallgeschwindigkeit kann damit ein Abstand eines Hindernisses zwischen den Sensoren 3, 3' und/oder 4 und damit dem Fahrzeug und einem Hindernis außerhalb des Fahrzeugs bestimmt werden. Unterschreitet dieser Abstand ein vorgegebenes Maß, so wird eine optische Warnung über eine Anzeigeeinheit 8 und/oder eine akustische Warnung über einen Lautsprecher 7 ausgegeben.

Neben der beschriebenen Ausführungsform der Ultraschallsensoren 3, 3' und 4 als Ultraschallwandler, die eine Umschaltung zwischen Sende- und Empfangsbetrieb erlauben und dazu einen Sende- und einen Empfangspfad aufweisen, sind auch Ultraschallsensoren verwendbar, die eine getrennte Sende- und Empfangseinheiten aufweisen.

Die Auswertelogiken der Ultraschallsensoren 3, 3' und/ oder 4 und/oder die übergeordnete Steuereinheit 6 sind ferner in erfindungsgemäßer Weise dazu ausgelegt, eine Funktionsprüfung der Ultraschallsensoren 3, 3' und/oder 4 durchzuführen. Da durch die Funktionsprüfung vor allem Beeinträchtigungen der Funktionsfähigkeit der Ultraschallsensoren 3, 3' und/oder 4 durch beispielsweise Vereisung oder starke Verschmutzung erkannt werden sollen, spricht man häufig auch von einer sog. Blindheits-Prüfung der Ultraschallsensoren 3, 3' und/oder 4.

In Fig. 2 ist das Fahrzeug 1 in Seitenansicht gezeigt, wobei die Ultraschallsensoren 3, 3' und 4 am Stoßfänger 10 des Fahrzeugs 1 angeordnet sind. In Fig. 2 ist beispielhaft nur einer der Ultraschallsensoren, nämlich der Ultraschallsensor 3', gezeigt. Der Ultraschallsensor 3' erzeugt in seiner Grundmode, das heißt bei seiner Grundfrequenz, ein keulenförmiges Schallfeld 11, welches in Fig. 2 als durchgezogene Linie dargestellt ist. Im Nutzbetrieb, also bei einem bestimmungsgemäßen Einsatz des Ultraschallsensors 3' zur Abstandsmessung wird der Ultraschallsensor 3' durch die übergeordnete Steuereinheit 6 mit einem Steuersignal der Grundfrequenz, z.B. 48 kHz für einen Ultraschallsensor der Generation 4, beaufschlagt. Der Ultraschallsensor 3' wird also im Nutzbetrieb in seiner Grundmode betrieben.

Neben dieser Grundmode weisen Ultraschallsensoren jedoch weitere akustische Nebenmoden auf, deren Frequenzen unter anderem von den eingesetzten Ultraschallsensoren und deren Bauformen abhängen und zum Beispiel auf Resonanzeffekte zurückzuführen sind. Die Abstrahlcharakteristik des Ultraschallsensors 3' bei Betrieb in einer Nebenmode ist in Fig. 2 als Strich-Punkt-Linie dargestellt. Das Schallfeld 12 weist dabei neben einer Hauptkeule 13 Nebenkeulen 14 auf, welche sich fingerartig neben der Hauptkeule 12 erstrecken. Derartige Nebenkeulen 14 bilden sich grundsätzlich auch beim Nutzbetrieb des Ultraschallsensors 3' in der Grundmode, sind aber in Fig. 2 nicht dargestellt. Darüber hinaus gibt es in der Regel mehr als eine Nebenmode. Aus Gründen der Übersichtlichkeit ist aber in Figur nur das Schallfeld einer einzigen Nebenmode dargestellt. Aufgrund der im Vergleich zur Grundfrequenz der Grundmode höher liegenden Betriebsfrequenz des Ultraschallsensors 3' in der Nebenmode, z.B. 113 kHz, ergibt sich für die Nebenmode eine im Vergleich zur Hauptmode schmalere Hauptkeule des Schallfeldes.

Erfindungsgemäß werden nun im Nutzbetrieb, also zur Abstandsmessung, Schallwellen der Grundmode verwendet, wohingegen zur Funktionsprüfung des Ultraschallsensors 3' die Schallwellen einer Nebenmode verwendet werden. Hierzu wird der Ultraschallsensor 3' vorzugsweise mit einem Steuersignal angesteuert, welches sowohl Frequenzanteile der Grundmode des Ultraschallsensors 3' als auch Frequenzanteile einer ausgewählten Nebenmode des Ultraschallsensors 3' aufweist. Die Frequenzanteile sind dabei jeweils so groß zu wählen, dass der Ultraschallsensor 3' sowohl ein Ultraschallsignal mit der Frequenz der Grundmode als auch ein Ultraschallsignal mit der Frequenz der Nebenmode aussendet. Mit Hilfe eines Steuersignals, welches den Ultraschallsensor 3' sowohl zum Aussenden eines Ultraschallsignals mit der Frequenz der Grundmode als auch eines Ultraschallsignals mit der Frequenz der Nebenmode anregt, ist es möglich, die Funktionsprüfung des Ultraschallsensors 3' zeitlich parallel zum Nutzbetrieb des Ultraschallsensors durchzuführen. Alternativ dazu kann der Ultraschallsensor 3' aber auch mit Hilfe zweier getrennter Steuersignale derart angesteuert werden, dass er entweder ein Ultraschallsignal mit der Frequenz der Grundmode oder ein Ultraschallsignal mit der Frequenz der Nebenmode oder bei entsprechender Überlagerung der beiden Steuersignale auch ein Ultraschallsignal mit Frequenzanteilen der Grund- und der Nebenmode aussendet. Die ausgesendeten Ultraschallsignale werden unabhängig von der Mode und damit von der Frequenz von der Oberfläche eines Hindernisses 15 reflektiert, welches in Fig. 2 gestrichelt eingezeichnet ist, aber auch von einer Bodenfläche 16 im Bereich des Fahrzeugs 1 - häufig als Bodenecho bezeichnet. Aufgrund des flachen Auftreffwinkels der Ultraschallkeulen auf die Bodenfläche 16 wird ein Großteil der auftretenden Ultraschallwellen von dem Fahrzeug 1 weg reflektiert. Durch Unebenheiten der Bodenfläche 16, die bei üblichen Fahrbahnbelägen, wie zum Beispiel Asphalt, praktisch stets vorhanden ist, wird jedoch auch ein Teil der ausgesendeten Ultraschallsignale von der Bodenfläche 16 zu dem Ultraschallsensor 3' oder zu einem benachbarten Ultraschallsensor 3 zurückreflektiert.

Erfindungsgemäß wird der Sendepfad des Ultraschallsensors 3' dann als funktionsfähig eingestuft, wenn das reflektierte Signal mit der Frequenz einer Nebenmode wieder empfangen wird. Der Empfang des Signals kann dabei derart erfolgen, dass der Ultraschallsensor 3' nach Aussenden des Ultraschallsignals in einen Empfangsbetrieb geschaltet wird, so dass er das von ihm selbst ausgesendete Signal auch wieder selbst empfangen kann. In einer weiteren Betriebsart können alternativ oder zusätzlich weitere Ultraschallsensoren 3 und /oder 4 in eine Empfangsbetriebsart geschaltet werden, um das von dem Ultraschallsensor 3' ausgesendete Ultraschallsignal zu empfangen. Wird das reflektierte Signal durch den das aussendenden Ultraschallsensor 3' selbst wieder empfangen, wird auch der Empfangspfad des Ultraschallsensor 3' als funktionsfähig eingestuft. Für den Fall, dass das reflektierte Signal durch einen oder mehrere der weiteren Ultraschallsensoren 3 und/oder 4 empfangen wird, können die Empfangspfade dieser Ultraschallsensoren als funktionsfähig eingestuft werden.

In einer bevorzugten Ausführungsform der Erfindung wird die Funktion eines Ultraschallsensors 3' anhand der Reflektion des Ultraschallsignals der Nebenmode an der Bodenfläche 16 im Bereich um das Fahrzeug 1 geprüft. Da eine Bodenfläche 16 in nahezu jeder Betriebssituation des Fahrzeugs vorhanden ist, wird auf diese Weise eine weitgehende Unabhängigkeit vom Fahrzeugstandort erreicht. Bei der Funktionsprüfung des Ultraschallsensors 3' mit Hilfe von Bodenreflektionen wirkt es sich besonders vorteilhaft aus, dass das Schallfeld 12 des Ultraschallsensors 3' Nebenkeulen 14 aufweist, die teilweise auch in Richtung der Bodenfläche 16 gerichtet sind. Dadurch sind ausreichende Teile des Schallfeldes 12 in Richtung der Bodenfläche 16 ausgeprägt, so dass eine verlässliche Funktionsprüfung ohne zwingende Zusatzmaßnahmen, wie zum Beispiel Veränderung der Signaldauer und/oder -amplitude oder Erhöhen der Empfindlichkeit des Ultraschallsensors 3', notwendig sind. Derartige Maßnahmen, wie sie beispielsweise aus der DE 10 2005 057 973 A1 bekannt sind, können aber selbstverständlich auch auf das erfindungsgemäße Verfahren und die erfindungsgemäße Vorrichtung angewendet werden.

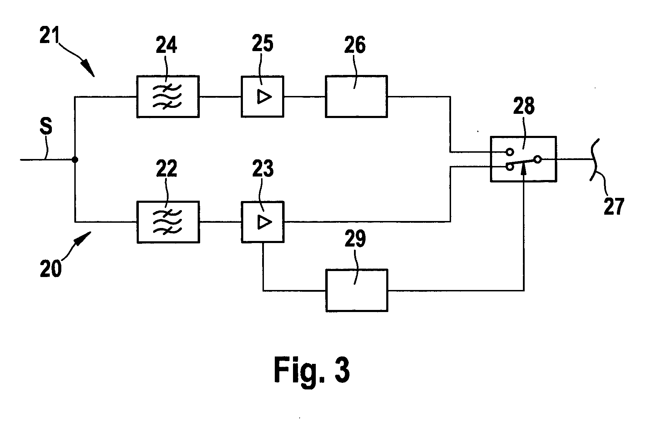

In Fig. 3 ist eine mögliche Ausgestaltung des Empfangspfades des Ultraschallsensors 3' dargestellt. Der Empfangspfad des Ultraschallsensors 3' muss sowohl auf Eingangssignale mit der Frequenz der Grundmode des Ultraschallsensors 3' als auch auf Eingangssignale mit der Frequenz der verwendeten Nebenmode des Ultraschallsensors 3' ausgelegt sein, diese also empfangen und verarbeiten können. Dies kann beispielsweise in zwei parallelen Auswertezweigen erfolgen. In einem ersten Empfangszweig 20, über den der Nutzbetrieb des Ultraschallsensors 3' abgebildet wird, ist ein erstes Bandpassfilter 22 vorgesehen, welches dazu dient Eingangssignale S mit anderen Frequenzen als der Grundfrequenz der Grundmode auszufiltern. An den ersten Bandpassfilter 22 schließt sich eine erste Verstärkereinheit 23 an. In einem zweiten Empfangszweig 21, über den der Prüfbetrieb des Ultraschallsensors 3' abgebildet wird, ist ein zweites Bandpassfilter 24 vorgesehen, welches auf die Frequenz der ausgewählten Nebenmode zentriert ist und somit Eingangssignale S mit anderen Frequenzen ausfiltert. An das zweite Bandpassfilter 24 schließt sich eine zweite Verstärkereinheit 25 an. Da die Signalamplituden in dem zweiten Empfangszweig 21 geringer sind und die Signale auch nicht zur Abstandsmessung dienen, ist der Verstärkungsfaktor der Verstärkereinheit 25 in dem zweiten Empfangszweig 21 für die Nebenmode abstandsunabhängig und typischer Weise höher als der Verstärkungsfaktor der Verstärkereinheit 23 in dem ersten Empfangszweig 20 für die Grundmode. Im Empfangszweig 21 ist außerdem eine Auswertelogik 26 vorgesehen, welche die empfangenen reflektierten Signale, vorzugsweise der Bodenechos, mit einem Schwellwert vergleicht und im einfachsten Fall die Anzahl der über dem Schwellwert liegenden empfangenen reflektierten Signale zählt, um diese Zahl über eine Schnittstelle 27 an die übergeordnete Steuereinheit 6 zur weiteren Auswertung zu übermitteln. Alternativ dazu kann die weitere Auswertung über die Funktionsfähigkeit des Ultraschallsensors 3' auch unmittelbar in der Auswertelogik 26 erfolgen, zum Beispiel durch Vergleich der ermittelten Anzahl der Bodenechos mit einem weiteren parametrierbaren Schwellwert.

Vorteilhaft werden die Daten der Auswertelogik 26 in Zeitabschnitten an die übergeordnete Steuereinheit 6 übertragen, welche nicht für die Übertragung von Signalen und/oder Daten aus dem Nutzbetrieb des Ultraschallsensors 3' in der Grundmode genutzt werden. Hierzu kann beispielsweise eine Schalteinheit 28 vorgesehen sein, die durch eine Steuerlogik 29 gesteuert wird. Die Steuerlogik 29 ist dabei mit einer Einheit des ersten Empfangszweiges 20, z.B. der ersten Verstärkereinheit 23, verbunden und steuert die Schalteinheit 28 derart, dass Signale und/oder Daten bzgl. der Funktionsprüfung nur dann an die übergeordnete Steuereinheit 6 übertragen werden, wenn keine Signale und/oder Daten bzgl. der Abstandsmessung zu übertragen sind.

## Patentansprüche

1. Verfahren zur Funktionsprüfung eines Ultraschallsensors (3') an einem Kraftfahrzeug (1), wobei
- der Ultraschallsensor (3') derart angesteuert wird, dass er ein Ultraschallsignal mit einer Frequenz einer Nebenmode des Ultraschallsensors (3') aussendet,
- das Ultraschallsignal von einer Fläche (15;16) im Bereich um das Fahrzeug (1) reflektiert wird und
- zumindest ein Sendepfad oder eine Sendeeinheit des Ultraschallsensors (3') dann als funktionsfähig eingestuft wird, wenn das reflektierte Signal von dem Ultraschallsensor (3') selbst oder von einem anderen Ultraschallsensor (3; 4) am Kraftfahrzeug (1) empfangen wird.

2. Verfahren nach Anspruch 1, wobei auch ein Empfangspfad oder eine Empfangseinheit des Ultraschallsensors (3') als funktionsfähig eingestuft wird, wenn das reflektierte Signal von dem Ultraschallsensor (3') selbst empfangen wird.

3. Verfahren nach einem der Ansprüche 1 oder 2, wobei ein Empfangspfad oder eine Empfangseinheit des anderen Ultraschallsensors (3, 4) als funktionsfähig eingestuft wird, wenn das reflektierte Signal von dem anderen Ultraschallsensor (3, 4) empfangen wird.

4. Verfahren nach einem der Ansprüche 1 bis 3, wobei der Ultraschallsensor (3') derart gesteuert wird, dass das ausgesendete Ultraschallsignal zumindest von einer Bodenfläche (16) im Bereich um das Fahrzeug (1) reflektiert wird.

5. Verfahren nach einem der vorhergehenden Ansprüche, wobei der Ultraschallsensor (3') mit einem Steuersignal angesteuert wird, welches Frequenzanteile der Nebenmode des Ultraschallsensors (3') und der Grundmode des Ultraschallsensors (3') aufweist, wobei die Frequenzanteile jeweils derart groß sind, dass der Ultraschallsensor (3') sowohl ein Ultraschallsignal mit der Frequenz der Nebenmode als auch ein Ultraschallsignal mit der Frequenz der Grundmode aussendet.

6. Verfahren nach einem der vorhergehenden Ansprüche, wobei die Einstufung der Funktionsfähigkeit in einer Auswertelogik (26) des Ultraschallsensors (3, 3', 4) oder in einer übergeordneten Steuereinheit (6) erfolgt.

7. Verfahren zum Betrieb eines Ultraschallsensors (3') an einem Kraftfahrzeug (1), wobei das Verfahren zur Funktionsprüfung des Ultraschallsensors (3') gemäß einem der Ansprüche 1 bis 5 zumindest teilweise gleichzeitig zum Nutzbetrieb des Ultraschallsensors (3') durchgeführt wird.

8. Verfahren nach Anspruch 7, wobei Signale und/ oder Daten bezüglich der Funktionsprüfung an eine übergeordnete Steuereinheit (6) übertragen werden in Zeitabschnitten, in welchen keine Signale und/oder Daten aus dem Nutzbetrieb des Ultraschallsensors (3') übertragen werden.

9. Abstandsmessvorrichtung mit wenigstens einem Ultraschallsensor (3') zur Verwendung in einem Kraftfahrzeug (1), mit einer übergeordneten Steuereinheit (6) zur Veranlassung
- eines Aussendens eines Ultraschallsignals mit einer Frequenz einer Grundmode des Ultraschallsensors (3') und
- eines Aussendens eines Ultraschallsignals mit einer Frequenz einer Nebenmode des Ultraschallsensors (3'),
wobei das Ultraschallsignal mit der Frequenz der Nebenmode zur Funktionsprüfung des Ultraschallsensors (3') gemäß einem der Ansprüche 1 bis 5 verwendet wird.

10. Abstandsmessvorrichtung gemäß Anspruch 9, wobei ein Empfangspfad oder eine Empfangseinheit des Ultraschallsensors (3') sowohl Ultraschallsignale mit einer Frequenz der Grundmode als auch mit der Frequenz der Nebenmode des Ultraschallsensors empfangen und verarbeiten kann.

11. Abstandsmessvorrichtung gemäß einem der Ansprüche 9 oder 10 mit einer Steuerlogik (29), die eine Übertragung der Ergebnisse der Funktionsprüfung an die übergeordnete Steuereinheit (6) nur in Zeitabschnitten zulässt, in denen keine Daten aus dem Nutzbetrieb des Ultraschallsensors (3') übertragen werden.

## Claims

1. Method for functionally testing an ultrasonic sensor (3') on a motor vehicle (1),
- the ultrasonic sensor (3') being controlled in such a manner that it emits an ultrasonic signal at a frequency of a secondary mode of the ultrasonic sensor (3'),
- the ultrasonic signal being reflected by a surface (15; 16) in the region around the vehicle (1), and
- at least one transmission path or a transmission unit of the ultrasonic sensor (3') being classified as functional when the reflected signal is received by the ultrasonic sensor (3') itself or by another ultrasonic sensor (3; 4) on the motor vehicle (1).

2. Method according to Claim 1, a reception path or a reception unit of the ultrasonic sensor (3') also being classified as functional when the reflected signal is received by the ultrasonic sensor (3') itself.

3. Method according to either of Claims 1 and 2, a reception path or a reception unit of the other ultrasonic sensor (3, 4) being classified as functional when the reflected signal is received by the other ultrasonic sensor (3, 4).

4. Method according to one of Claims 1 to 3, the ultrasonic sensor (3') being controlled in such a manner that the emitted ultrasonic signal is reflected at least by a floor area (16) in the region around the vehicle (1).

5. Method according to one of the preceding claims, the ultrasonic sensor (3') being controlled with a control signal having frequency components of the secondary mode of the ultrasonic sensor (3') and of the fundamental mode of the ultrasonic sensor (3'), the frequency components each being so large that the ultrasonic sensor (3') emits both an ultrasonic signal at the frequency of the secondary mode and an ultrasonic signal at the frequency of the fundamental mode.

6. Method according to one of the preceding claims, the functionality being classified in an evaluation logic unit (26) of the ultrasonic sensor (3, 3', 4) or in a superordinate control unit (6).

7. Method for operating an ultrasonic sensor (3') on a motor vehicle (1), the method for functionally testing the ultrasonic sensor (3') according to one of Claims 1 to 5 being carried out at least partially at the same time as the use mode of the ultrasonic sensor (3').

8. Method according to Claim 7, signals and/or data relating to the functional test being transmitted to a superordinate control unit (6) in periods in which no signals and/or data from the use mode of the ultrasonic sensor (3') are transmitted.

9. Distance measuring apparatus having at least one ultrasonic sensor (3') for use in a motor vehicle (1), having a superordinate control unit (6) for causing
- an ultrasonic signal to be emitted at a frequency of a fundamental mode of the ultrasonic sensor (3') and
- an ultrasonic signal to be emitted at a frequency of a secondary mode of the ultrasonic sensor (3'),
the ultrasonic signal at the frequency of the secondary mode being used to functionally test the ultrasonic sensor (3') according to one of Claims 1 to 5.

10. Distance measuring apparatus according to Claim 9, a reception path or a reception unit of the ultrasonic sensor (3') being able to receive and process both ultrasonic signals at a frequency of the fundamental mode and at the frequency of the secondary mode of the ultrasonic sensor.

11. Distance measuring apparatus according to either of Claims 9 and 10, having a control logic unit (29) which allows the results of the functional test to be transmitted to the superordinate control unit (6) only in periods in which no data from the use mode of the ultrasonic sensor (3') are transmitted.

## Revendications

1. Procédé d'essai de fonctionnement d'un capteur à ultrasons (3') placé au niveau d'un véhicule à moteur (1) :
- le capteur à ultrasons (3') étant commandé de telle sorte qu'il émet un signal à ultrasons à une fréquence d'un mode secondaire du capteur à ultrasons (3') ;
- le signal à ultrasons étant réfléchi par une surface (15 ; 16) située dans la région entourant le véhicule (1) ; et
- au moins un trajet d'émission ou une unité d'émission du capteur à ultrasons (3') étant classés comme fonctionnels lorsque le signal réfléchi est reçu par le capteur à ultrasons (3') lui-même ou par un autre capteur à ultrasons (3 ; 4) prévu au niveau du véhicule à moteur (1).

2. Procédé selon la revendication 1, un trajet de réception ou une unité de réception du capteur à ultrasons (3') étant également classés comme fonctionnels lorsque le signal réfléchi est reçu par le capteur à ultrasons (3') lui-même.

3. Procédé selon l'une quelconque des revendications 1 ou 2, un trajet de réception ou une unité de réception de l'autre capteur à ultrasons (3, 4) étant classés comme fonctionnels lorsque le signal réfléchi est reçu par l'autre capteur à ultrasons (3, 4).

4. Procédé selon l'une quelconque des revendications 1 à 3, le capteur à ultrasons (3') étant commandé de telle sorte que le signal à ultrasons émis est réfléchi au moins par une surface de sol (16) située dans la région entourant le véhicule (1).

5. Procédé selon l'une quelconque des revendications précédentes, le capteur à ultrasons (3') étant commandé par un signal de commande comportant des composantes de fréquence du mode secondaire du capteur à ultrasons (3') et du mode principal du capteur à ultrasons (3'), les composantes de fréquence étant respectivement d'une ampleur telle que le capteur à ultrasons (3') émet tant un signal à ultrasons à la fréquence du mode secondaire qu'un signal à ultrasons à la fréquence du mode principal.

6. Procédé selon l'une quelconque des revendications précédentes, le classement de la capacité fonctionnelle se produisant dans une logique d'analyse (26) du capteur à ultrasons (3, 3', 4) ou dans une unité de commande maître (6).

7. Procédé de fonctionnement d'un capteur à ultrasons (3') placé au niveau d'un véhicule à moteur (1), le procédé d'essai de fonctionnement du capteur à ultrasons (3') selon l'une quelconque des revendications 1 à 5 étant réalisé au moins en partie simultanément par rapport au fonctionnement utile du capteur à ultrasons (3').

8. Procédé selon la revendication 7, des signaux et/ou des données relatifs à l'essai de fonctionnement étant transmis à une unité de commande maître (6) pendant certaines plages temporelles pendant lesquelles aucuns signaux et/ou aucunes données du fonctionnement utile du capteur à ultrasons (3') ne sont transmis.

9. Dispositif de mesure de distance doté d'au moins un capteur à ultrasons (3') pour l'utilisation dans un véhicule à moteur (1), avec une unité de commande maître (6) décidant :
- de l'émission d'un signal à ultrasons à une fréquence d'un mode principal du capteur à ultrasons (3') ; et
- de l'émission d'un signal à ultrasons à une fréquence d'un mode secondaire du capteur à ultrasons (3') ;
le signal à ultrasons à la fréquence du mode secondaire étant utilisé pour réaliser l'essai de fonctionnement du capteur à ultrasons (3') selon l'une quelconque des revendications 1 à 5.

10. Dispositif de mesure de distance selon la revendication 9, un trajet de réception ou une unité de réception du capteur à ultrasons (3') recevant et traitant tant des signaux à ultrasons à une fréquence du mode principal qu'à la fréquence du mode secondaire du capteur à ultrasons.

11. Dispositif de mesure de distance selon l'une quelconque des revendications 9 ou 10, avec une logique de commande (29) ne décidant d'une transmission des résultats de l'essai de fonctionnement à l'unité de commande maître (6) que pendant les plages temporelles pendant lesquelles aucunes données provenant du fonctionnement utile du capteur à ultrasons (3') ne sont transmises.
